# EUROPEAN PATENT APPLICATION

(11) **EP 1 898 297 A1**
(43) Date of publication of application: **12.03.2008**
(21) Application number: 05729423.3
(22) Date of filing: 08.04.2005
(51) Int. Cl.: G06F 3/00, G06F 3/03, G06F 3/033

(54) **SCREEN INFORMATION EDITION DEVICE, METHOD, AND PROGRAM, RECORDING MEDIUM, AND INFORMATION PROCESSING TERMINAL MANUFACTURING METHOD**

(71) Applicant: World Picom Kabushiki Kaisha, Yokohama-shi, Kanagawa 222-0033 (JP)
(72) Inventor: TERASE, Takao c/o World Picom Kabushiki Kaisha, Yokohama-shi, Kanagawa 222-0033 (JP)
(74) Representative: Schwabe - Sandmair - Marx
(86) International application number: PCT/JP2005/007283
(87) International publication number: WO 2005/114363

(57) **Abstract**

A device, having an information input unit 16 and a display 15, includes a screen information master unit M1 for storing a screen information shown on an information processing terminal with a touch panel and defining the processing content of the information processing terminal according to the touch position on the screen; an image master unit M2 storing image files composing the screen; an image display unit for showing an image file Q2 in the image master unit M2 on the display 15 in an overlapping manner with a layout frame L1 having a plurality of cells for editing the screen information; and a cell information obtaining unit for obtaining, via the information input unit 16, cell information of the cell in the layout frame L1 shown in an overlapping manner with the image file Q2, generating screen information from the obtained cell information, and storing it in the screen information master unit M1. This arrangement enables an editor to edit the cell information of each cell in the layout frame L 1 shown in an overlapping manner with the image file Q2.

## Description

### TECHNICAL FIELD

The present invention relates to editing screen information of a screen shown by an information processing terminal comprising a touch panel. Here, screen information, which is associated with each of the screens shown on the display of the information processing terminal, defines the processing content of the information processing terminal corresponding to the touch position on the screen.

### BACKGROUND ART

In recent years, self-order systems have been spreading, mainly in restaurants or the like in order to suppress labor cost and enhance customer satisfaction. A self-order system is a system which lets the customer operate a self-order terminal and accepts orders for articles, the self-order terminal being installed in the restaurant to show sample images or names of articles ("article image", hereinafter). A variety of techniques have been proposed with regard to self-order systems in the past (see, for example, patent literatures 1, 2, 3 and 4).
With regard to self-order terminals, those comprising a touch panel have been proposed, which allow the customer to order an article with ease while viewing an order screen with the article image shown thereon. In other words, for example, with a plurality of article images shown on the order screen, the self-order terminal generates order information of the article corresponding to the touched article image when a customer touches one of the article images with his/her finger, and transmits the information to a kitchen terminal located in the restaurant (see, for example, patent literatures 5 and 6).

With the order screens shown on self-order systems or self-order terminals which have been proposed, an article image corresponds to the article that can be ordered by the customer in a one-to-one relationship, as shown in Fig. 9 of patent literature 5 or Fig. 12 of patent literature 6.

Such a prior-art order screen uses a template of an order screen having a predefined display position of the article image to generate screen information by associating an article image shown on each display position with an article code identifying the article. Consequently, order screens which are made by using the same template turn out to have a same layout. Therefore, for example, it has been necessary to create an order screen template having a different layout in order to show a recommended article of the restaurant on a layout which is different from the layout of other articles.
Additionally, with a prior-art order screen it is necessary to provide display positions of a plurality of article images on the screen and define a processing in association with each of the display positions in order to cause the self-order terminal to execute different types of processing according to the touch position on the screen. Therefore it is not possible, for example, to show a plurality of related articles as a single article image and accept orders for different articles according to the touch position on an article image. Besides, with the prior-art order screen, for example, it is not possible to execute order processing of an article when a portion of the article image is touched and to execute display processing of related images (motion pictures of cooking etc.) when another portion of the same article image is touched.

With regard to the information processing terminal comprising a touch panel, automatic vending machines (see, for example, patent literature 7) or POS terminals (see for example, patent literature 8) are also available other than self-order terminals.
Patent Literature 1: Japanese Patent Laid-Open No. 9-288772
Patent Literature 2: Japanese Patent No. 3391369
Patent Literature 3: Japanese Patent Laid-Open No. 2004-206375
Patent Literature 4: Japanese Patent No. 3582782
Patent Literature 5: Japanese Patent Laid-Open No. 9-146756
Patent Literature 6: Japanese Patent No. 3505492
Patent Literature 7: Japanese Patent No. 3456852
Patent Literature 8: Japanese Patent No. 3382476

It is an object of the present invention, which is conceived in view of the above-mentioned prior-art situation, to provide a novel technique relating to editing screen information of the screens shown on the information processing terminal comprising a touch panel. In other words, the object of the present invention is to provide a screen information edition device and method, as well as a screen information edition program and a recording medium thereof, which can define the processing content of the information processing terminal, the processing is performed when any of the portions of an image file is touched by the user, while viewing the image file composing the screen shown on the information processing terminal with a touch panel.

### DISCLOSURE OF THE INVENTION

With the present invention, article images are shown in an overlapping manner with the layout configuration screen composed of a plurality of cells, and then configuration information for each cell is obtained to generate screen information. According to the present invention, screen information can be generated based on the article images shown on the order screen.

### BRIEF DESCRIPTION OF THE DRAWING

Fig. 1 is a block diagram illustrating an embodiment of a screen information edition device according to the present invention.
Fig. 2 illustrates an example of a screen shown on an information processing terminal operating based on screen information edited by the device.
Fig. 3 illustrates another example of the screen shown on the information processing terminal operating based on the screen information edited by the device.
Fig. 4 illustrates yet another example of the screen shown on the information processing terminal operating based on the screen information edited by the device.
Fig. 5 illustrates an example of the screen information edited by the device.
Fig. 6 illustrates an example of an image file composing the screen of Fig. 2.
Fig. 7 illustrates an example of an image file composing the screen of Fig. 3.
Fig. 8 illustrates an example of an image file composing the screen of Fig. 4.
Fig. 9 is a flow chart illustrating an embodiment of the screen information edition method executed by the device, according to the present invention.
Fig. 10 illustrates an example of a layout frame shown by the device.
Fig. 11 illustrates an example of a cell-ID of each cell in the layout frame.
Fig. 12 illustrates the relationship between each cell in the layout frame and coordinate values on the display of the information processing terminal.
Fig. 13 illustrates an example of cell positional information representing the relationship of Fig. 12.
Fig. 14 illustrates an example of showing the layout frame and the image file in an overlapping manner.
Fig. 15 illustrates another example of showing layout frame and the image file in an overlapping manner.
Fig. 16 illustrates an example of a cell information configuration screen shown by the device.
Fig. 17 illustrates another example of the cell information configuration screen shown by the device.
Fig. 18 illustrates an example of the order management information stored in a server composing a self-order system.
Fig. 19 illustrates an example of the sales management information stored in the server composing the self-order system.
Fig. 20 illustrates an example of the article information stored in the server composing the self-order system.
Fig. 21 is a block diagram of a self-order terminal composing the self-order system.

### DESCRIPTION OF THE PREFERRED EMBODIMENT

In the following, embodiments of a screen information edition device, edition method, and edition program, recording medium and information processing terminal manufacturing method according to the present invention will be described, referring to the accompanying drawings. The embodiments described below exemplify a case of editing screen information relating to the screen shown on the self-order terminal composing the self-order system of a restaurant.
Here, screen information, which is associated with each of the screens shown on the self-order terminal, defines the processing content of the self-order terminal corresponding to the touch position on each screen. Additionally, edition of screen information is meant to include registration, modification and deletion of the screen information, and more specifically, registration, modification and deletion of cell information contained in the screen information. Specific contents of screen information and cell information will be described below.

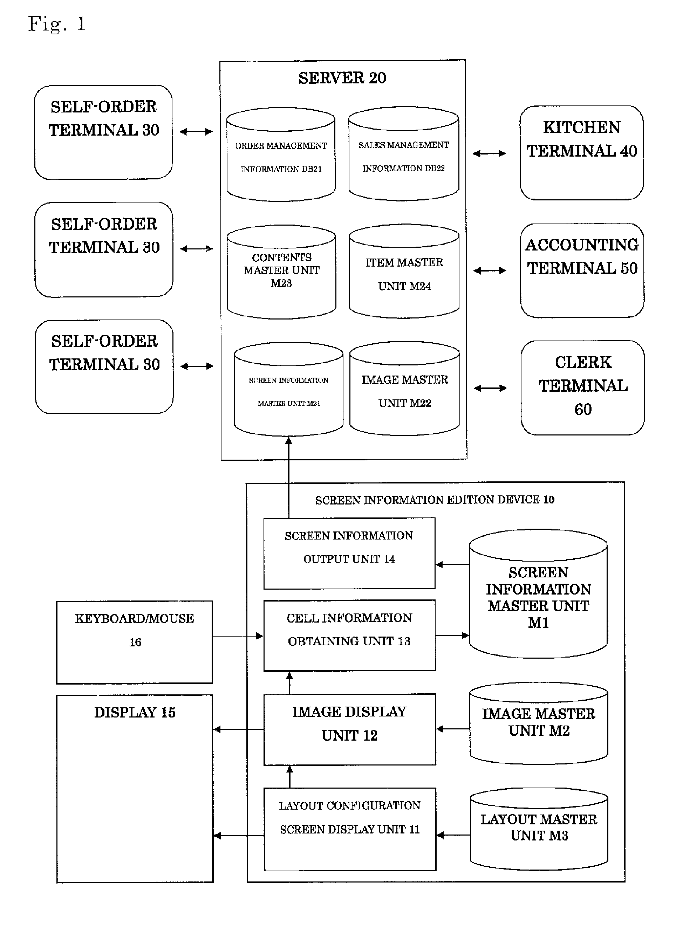

Fig. 1 is a block diagram illustrating an embodiment of a screen information edition device (referred to as "the present device", hereinafter) according to the present invention. The present device 10 is connected to a server 20 composing a self-order system via a communication line. The communication line may be, for example, a dedicated line, a Public Switched Telephone Network (PSTN), a radio telephone network, a CATV network, or a satellite communication network. As will be described below, the self-order system includes, other than the server 20, a self-order terminal 30, a kitchen terminal 40, an accounting terminal 50, and a clerk terminal 60. Note that it is necessary to connect the present device 10 to the server 20 only when transmitting the edited screen information, as will be described below.
The present device may be any information processor capable of executing the screen information edition method (referred to as "the present method", hereinafter) according to the present invention described below, and may employ a personal computer or the like, for example.
The present device 10 realizes the present method by executing the screen information edition program of the present invention (referred to as "the present program," hereinafter) and controlling respective units inside the present device 10. Note that a general purpose computer, for example, can function similarly as the present device using the recording medium having the present program recorded therein (referred to as "the present recording medium," hereinafter). In other words, if a general purpose computer reads the present program from the present recording medium, the present method can be realized on the general purpose computer.

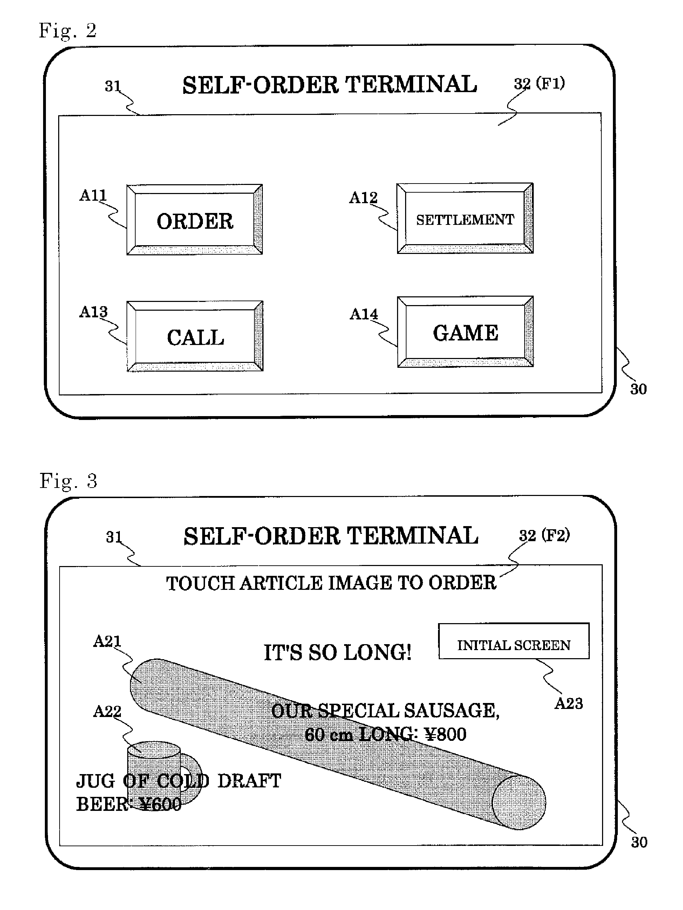

Figs. 2 to 4 illustrate examples of the screens shown on the display 31 of the self-order terminal 30. The self-order terminal 30, having a touch panel 32 on the display 31, is arranged to execute a process according to the touch position on the screen shown on the display 31, referring to the screen information edited by the present device 10.

Fig. 2 is the initial screen of the self-order terminal 30. An initial screen F1 has four areas A11, A12, A13 and A14 shown thereon, allowing the customer to select a desired processing by touching the display 31 with his/her finger. Each area has a pattern shown thereon, simulating a button with one of characters "order", "settle", "call", or "game". The self-order terminal 30 is arranged to execute: the "order processing" when the area A11 is touched; the "settlement processing" when the area A12 is touched; "call processing" when the area A 13 is touched; and the "contents processing" when the area A 14 is touched. Details of each processing will be described below.

Fig. 3 is an article selection screen F2 shown when the area A11 of the initial screen F1 shown in Fig. 2 is touched. The article selection screen F2 has an image A21 "sausage", an image A22 "beer", and a character string A23 "initial screen" shown thereon. The self-order terminal 30 shows an order confirmation screen of "sausage" or "beer" when the image A21, image A22, or their neighborhood is touched. In addition, the self-order terminal 30 shows the initial screen F1 shown in Fig. 2 when the character string A23 is touched.

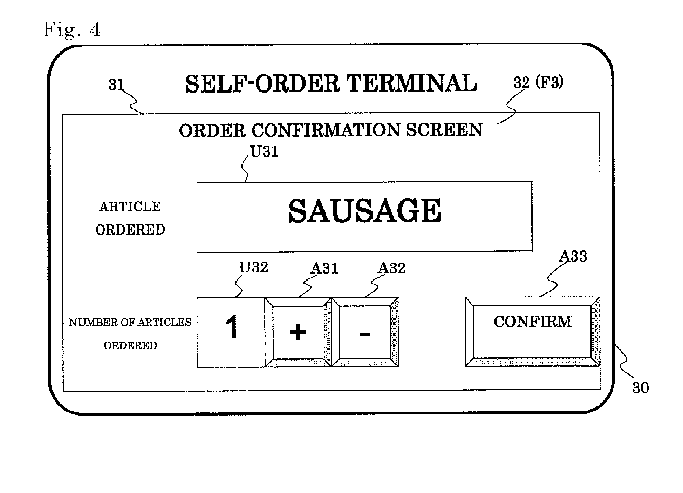

Fig. 4 is an order confirmation screen F3 shown when the neighborhood of the image A21 on the article selection screen F2 shown in Fig. 3 is touched. The order confirmation screen F3 has an article name field U31 and a number-of-articles-ordered field U32 of the ordered article, and three areas A31, A32 and A33 shown thereon. On the article name field U31, a character string "sausage" is shown when the image A21 in the article selection screen F2 of Fig. 3 or its neighborhood is touched, whereas a character string "beer" is shown when the neighborhood of the image A22 is touched. In addition, each area has a pattern shown thereon, simulating a button with one of the characters "+", "-", and "confirm". The self-order terminal 30 is configured such that the numeric value shown on the number-of-articles-ordered field U32 is increased or decreased when the area A31 or A32 is touched. In addition, the self-order terminal 30 is configured such that the order information is transmitted to the server 20 when the area A33 is touched. The order information to be transmitted includes the article ID relating to the article shown on the article name field U31, and the numeric value (number of articles ordered) shown on the number-of-articles-ordered field U32.

### (About the Present Device)

The present device 10 includes, as shown in Fig. 1, a layout configuration screen display unit 11, an image display unit 12, a cell information obtaining unit 13, a screen information output unit 14, an information display unit 15, an information input unit 16, a screen information master unit M1, an image master unit M2, and a layout master unit M3. An example of the information display unit 15 includes a display, and an example of the information input unit 16 includes a keyboard and a mouse.

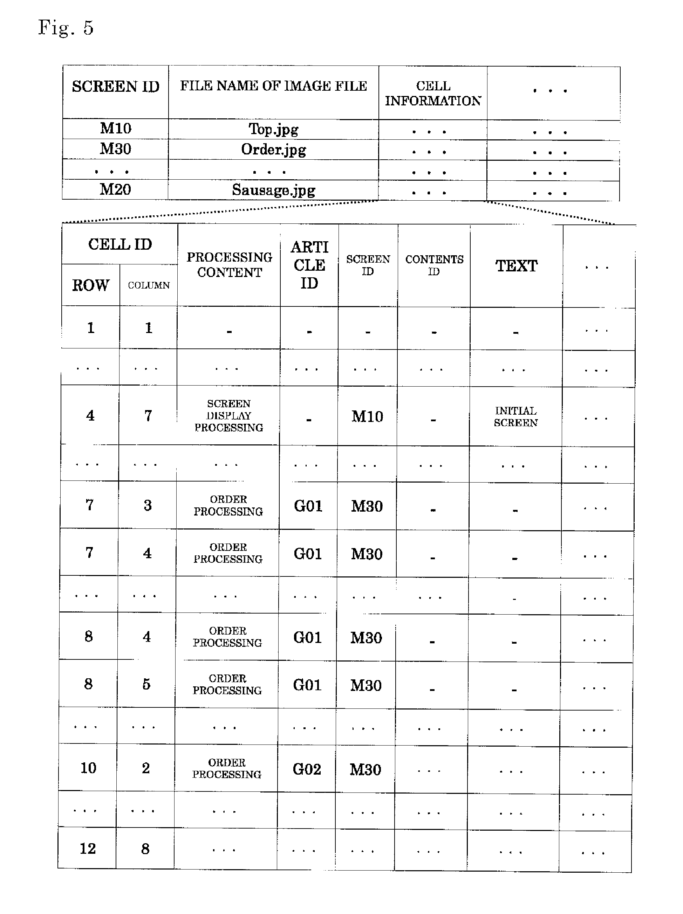

The screen information master unit M1 is a unit to store the screen information edited by the present device 10. The file format of the screen information includes CSV format. Fig. 5 illustrates an example of the screen information stored in the screen information master unit M1. The screen information includes the filename and cell information of an image file. The image file is an electronic file composing the screen shown on the display 31 of the self-order terminal 30. In addition, the cell information, which is associated with each of cells, includes the processing content of the self-order terminal 30 when a position corresponding to the cell on the screen is touched.

The image master unit M2 is a unit to store the image file. The self-order terminal 30 reads an image file from the image master unit M2 and shows it on the display 31. The file format of the image file includes JPEG, GIF, BMP, or the like.

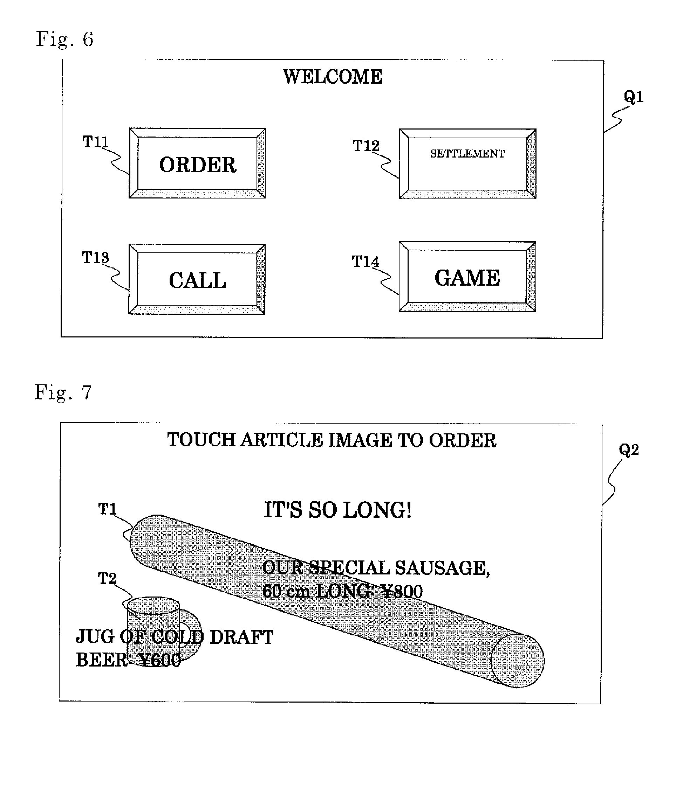

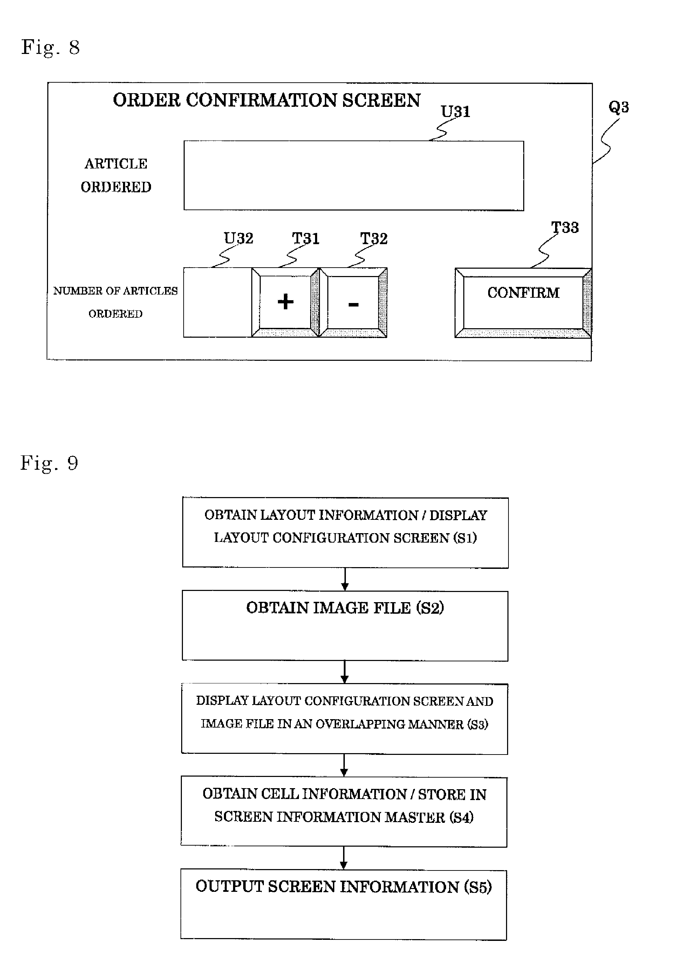

Figs. 6 to 8 are examples of the image file stored in the image master unit M2. The image file Q1 of Fig. 6, the image file Q2 of Fig. 7, and the image file Q3 of Fig. 8 correspond to the initial screen F1 of Fig. 2, the article selection screen F2 of Fig. 3, and the order confirmation screen F3 of Fig. 4, respectively. Here, on the initial screen F 1 of Fig. 2, the image file Q1 is shown as it is. With the article selection screen F2 of Fig. 3, characters "initial screen" are shown on the image file Q2 in an overlapping manner. The display position of the characters "initial screen" is defined in the screen information of the article selection screen F2. Furthermore, in the order confirmation screen F3 of Fig.4, the characters "sausage" is inserted and shown in the article name field U31, and the character "1" is inserted and shown in the number-of-articles-ordered field U32, respectively. "Inserted and shown" means that a program inside the self-order terminal 30 shows a predefined set of characters in a part of the image file which has been originally blank. Here, as described below, the characters to be inserted in the article name field U31 has been searched based on the article ID defined in the screen information of the article selection screen F2. In addition, the characters to be inserted in the number-of articles-ordered field U32 is defined in the screen information of the order confirmation screen F3.

The layout master unit M3 is a unit to store the layout information. The file format of the layout information includes CSV or the like. The layout information will be described below.

Fig. 9 is a flow chart illustrating an embodiment of the present method.
In the following, the present invention will be described, exemplifying a case in which an operator of the present device 10 (referred to as "editor", hereinafter) edits the screen information of the article selection screen F2 shown in Fig. 3.

The present device 10 reads the layout information from the layout master unit M3 using the layout configuration screen display unit 11, and shows the layout configuration screen on the display 15 (S1).

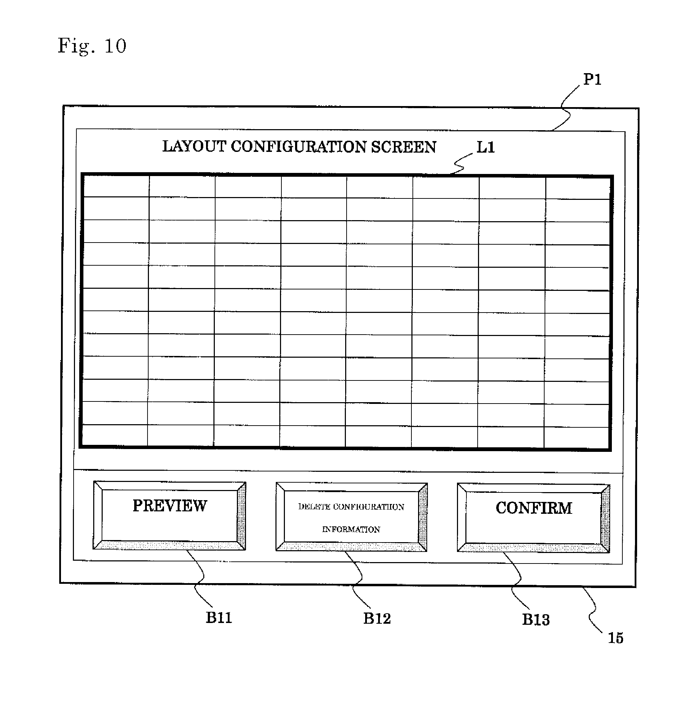

Fig. 10 illustrates an example of the layout configuration screen shown on the display 15. The layout configuration screen P1 has a layout frame L1 indicated by a heavy line in the figure shown thereon, with 96 (12 rows x 8 columns) cells being shown in the layout frame L1. A cell is an editing unit of screen information. In addition, layout information is a piece of information which defines the display position and size or the like of each cell on the display 15 in the layout frame L1, including, for example, "vertical length of the layout frame", "horizontal length of the layout frame", "number of cells in a column", "number of cells in a row" or the like. Here, the layout master unit M3 has a plurality of sets of layout information stored therein, including different sizes of the layout frame, and also different display positions or sizes of cells inside the layout frame in the display 15, and the present device 10 shows the layout configuration screen on the display 15, based on the layout information selected by the editor. In order to let the editor select the layout information, for example, each of the layout information may be associated with an identifier (such as "for drink order screen", "for classifying intermediate article ", "for showing submenu") and a list of identifiers of the layout information on the display 15 may be shown, whereby allowing the editor to select the layout information from among them.
The editor regards the layout frame L1 as the display 31 of the self-order terminal 30 and edits the processing content of the self-order terminal 30 for each cell when its position is touched. There are "screen display processing", "order processing", "settlement processing", "call processing", and "contents processing" as the processing content of the self-order terminal 30.
Here, buttons B11, B12 and B13, which are selectable by the mouse or the like when editing the screen information, are shown on the layout configuration screen P1 besides the layout frame L1. The operation of the present device 10 when respective buttons are selected will be described below.

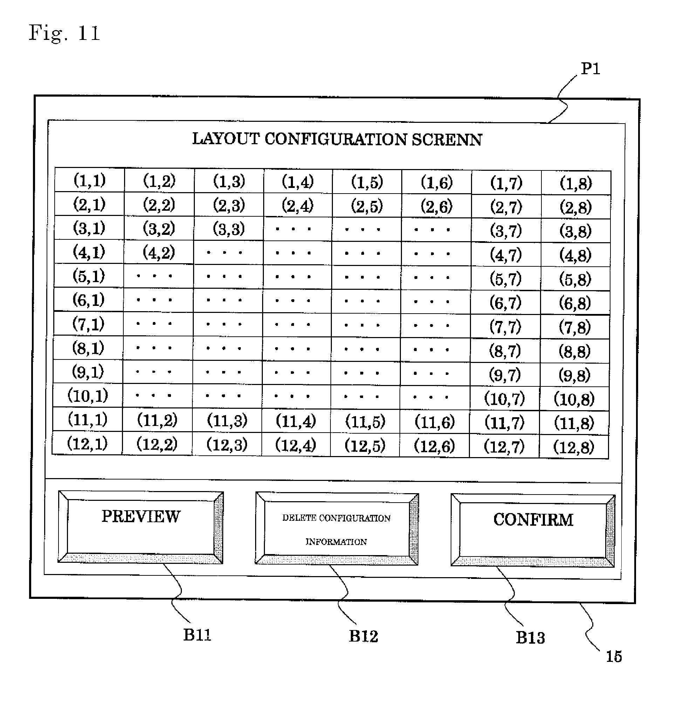

A cell-ID is provided to each cell in the layout frame L1. Fig. 11, illustrating an example of cell-IDs, indicates that a cell-ID is composed by a combination of a row number and a column number. In other words, the cell-ID of a cell located at the third row and the seventh column, for example, is (3,7).

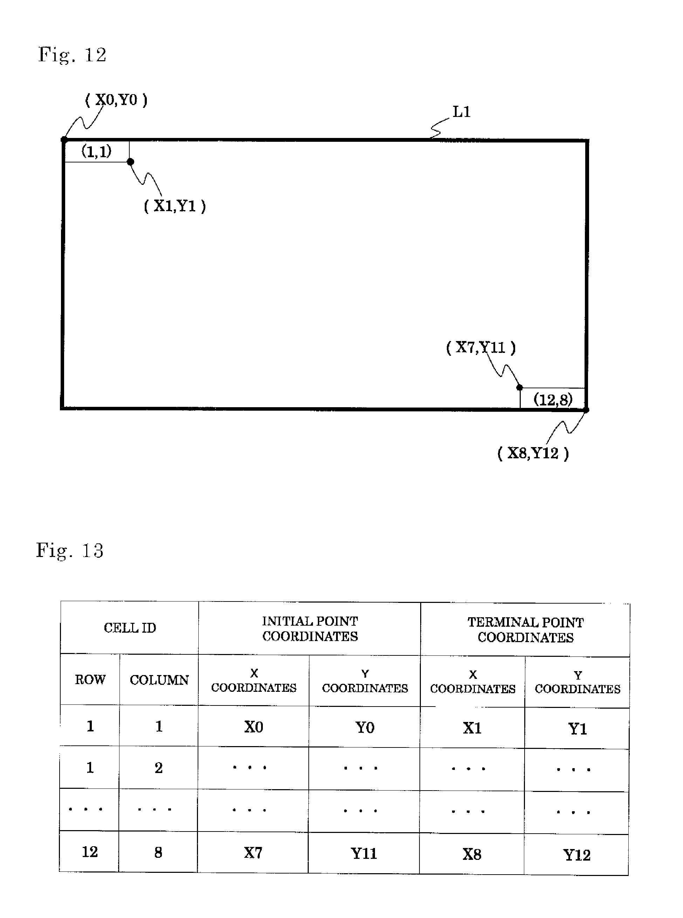

Fig. 12 illustrates the relationship between the cells in the layout frame L1 shown on the display 15 of the present device 10 and the coordinate values on the display 31 of the self-order terminal 30. For example, the relationship between the cell having a cell-ID (1, 1) and the positional information (X-coordinate value, Y-coordinate value) on the display 31 is given by:
X0 <= X-coordinate value < X1, Y0 <= Y-coordinate value < Y1
Here, the coordinate values (X0, Y0) and (X1, Y1) are referred to as the initial point coordinate value and the terminal point coordinate value of the cell-ID (1,1), respectively.
Fig. 13 illustrates an example of cell positional information stored in the cell positional information storage unit included in the self-order terminal 30. The cell positional information includes an initial point coordinate value and a terminal point coordinate value of respective cells in the layout frame L1. As will be described below, the self-order terminal 30 is arranged to search, upon locating the touch position on the display 31, the cell information based on the positional information (X-coordinate value, Y-coordinate value) of the touch position and specify the processing content. In other words, if the positional information (X-coordinate value, Y-coordinate value) of the touch position of the display 31 satisfies, for example,
X0 <= X-coordinate value < X1, Y0 <= Y coordinate value < Y1 (discriminant 1)
the self-order terminal 30 refers to the cell positional information storage unit, identifies the cell-ID (1,1), and searches the cell information of the cell-ID (1,1).

Note that discriminants 2 to 6 may be used in place of discriminant 1 as the discriminant of the touch position when self-order terminal 30 executes the processing content which is set in the cell-ID (1,1).
X0 < X-coordinate value <= X1, Y 0 < Y-coordinate value <= Y1 (discriminant 2)
X0 <= X-coordinate value <= X1, Y0 <= Y-coordinate value <= Y1 (discriminant 3)
X0 < X-coordinate value < X1, Y0< Y-coordinate value < Y1 (discriminant 4)
X0 <= X-coordinate value < X1, Y0 < Y-coordinate value <= Y1 (discriminant 5)
X0 < X-coordinate value <= X1, Y0 <= Y coordinate value < Y1 (discriminant 6)

Here, although all of the 96 cells included in the layout frame L1 shown in Fig. 10 are identical in shape, pattern, color and size, the aspects (shape, pattern, color, size) of respective cells in the layout frame do not have to be identical in the present invention. In other words, when three cells are included in the layout frame, for example, the aspects of the three cells may be different from one another, or, the aspects of two of the cells may be identical, with only the remaining one cell having a different aspect.

In addition, although all of the 96 cells included in the layout frame L1 shown in Fig. 10 are tightly arranged with no space in between, the cells in the layout frame may be arranged spaced apart from one another.

Let us now return to Fig. 9.
The present device 10 uses the image display unit 12 to show the image file on the display 15 in an overlapping manner with the layout frame. In other words, the present device 10 first reads the image file Q2 shown in Fig. 7 which is selected by the editor, from the image master unit M2 (S2). In order to allow the editor to select the image file Q2, the present device 10 may show, for example, a list of filenames of the image files stored in the image master unit M2 on the display 15 and let the editor select the desired filename. The filename of the image file is stored in the filename storage unit (not shown) in the present device 10.

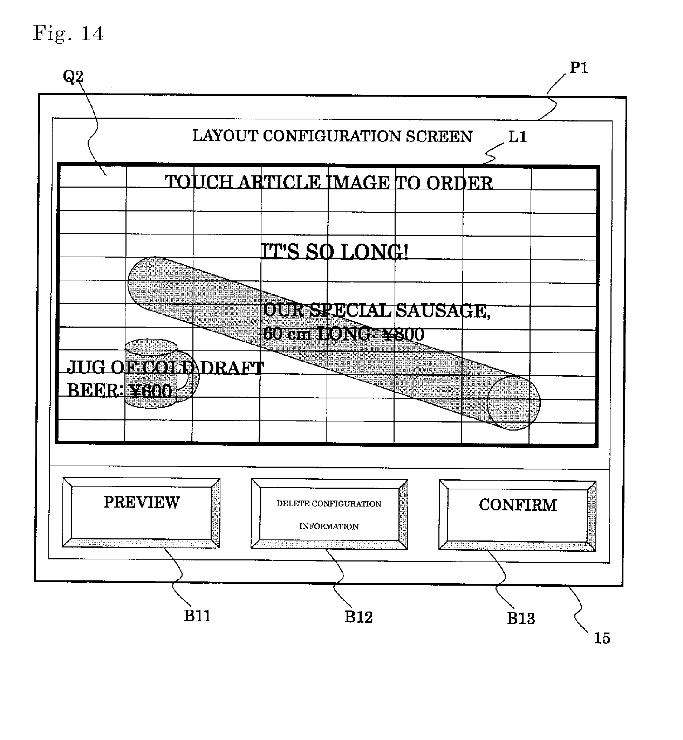

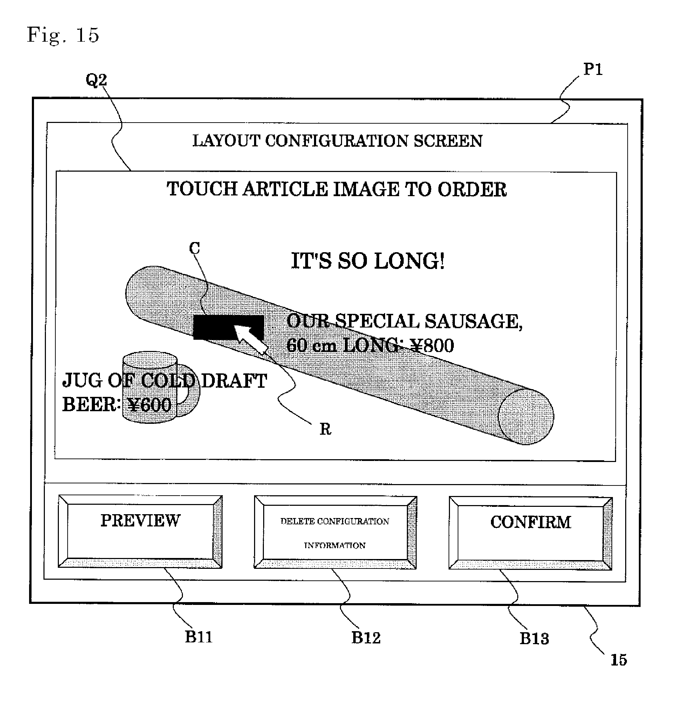

Next, the present device 10 shows the read-out image file Q2 in an overlapping manner with the layout frame L1 (S3).
Here, "show the image file Q2 on the display 15 in an overlapping manner with the layout frame L1" means that the layout frame L1 and the image file Q2 are shown so that the editor can select the desired cell in the layout frame L1 while viewing the image file Q2 shown on the cell display 15 and input the cell information.
Note that, in order to "show the layout configuration screen P1 and the image file Q2 in an overlapping manner", there is a method, for example, in which the boundary of each cell in the layout frame L1 may be shown on the image file Q2, as shown in Fig. 14, so that the editor can view it. Additionally, as another showing method, a cursor R whose display position can be moved by a mouse 16 may be shown on the image file Q2, as shown in Fig. 15, so that cell C, among the cells in the layout frame L1, at the position of the cursor R becomes visible by the editor.

In addition, when the present device 10 shows the layout configuration screen P1 and the image file Q2 in an overlapping manner using a unit (not shown), a cell having the cell information already input (i.e., a cell having the cell information stored in the cell information storage unit) and a cell not having the cell information input yet (i.e., a cell having no cell information stored in the cell information storage unit) may be shown on the display 15 in a different showing manner. In other words, for example, the color of a cell having already received an input and color of a cell not having received an input yet may be shown in a different manner so that the editor can readily identify a cell not having received an input yet.

Here, when showing the layout configuration screen P1 and the image file Q2 in an overlapping manner, the order of processes of S1 and S2 in Fig. 9 can be reversed, so that the layout configuration screen P1 may be shown on the display 15 after obtaining the image file Q2 and showing it on the display 15.

In addition, Fig. 14 illustrates an example in which the size of the image file Q2 coincides with the size of the layout frame L1, that is, the entire image file Q2 fits in the layout frame L1. However, in the present invention, the size of the image file does not have to coincide with that of the layout frame. In other words, for example, it may be configured such that only a part of the image file is shown on the layout frame, or the image file is shown on a portion of the layout frame.
Here, for convenience of explanation, the ratio between the size of each cell in the layout frame L 1 and the size of the display 15 is slightly exaggerated in Fig. 14. Since a cell in the layout frame is a unit of editing the screen information, the smaller the cell in the layout frame, the more detailed the processing content of the self-order terminal 30 can be defined.

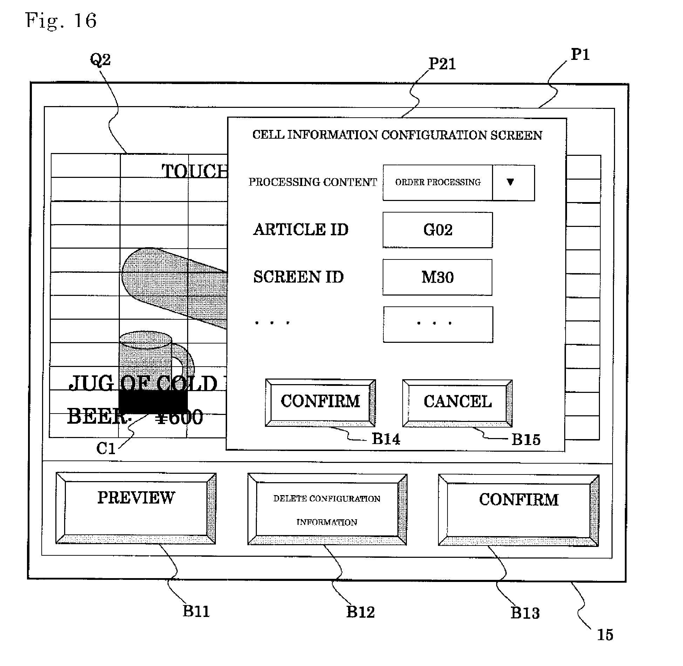

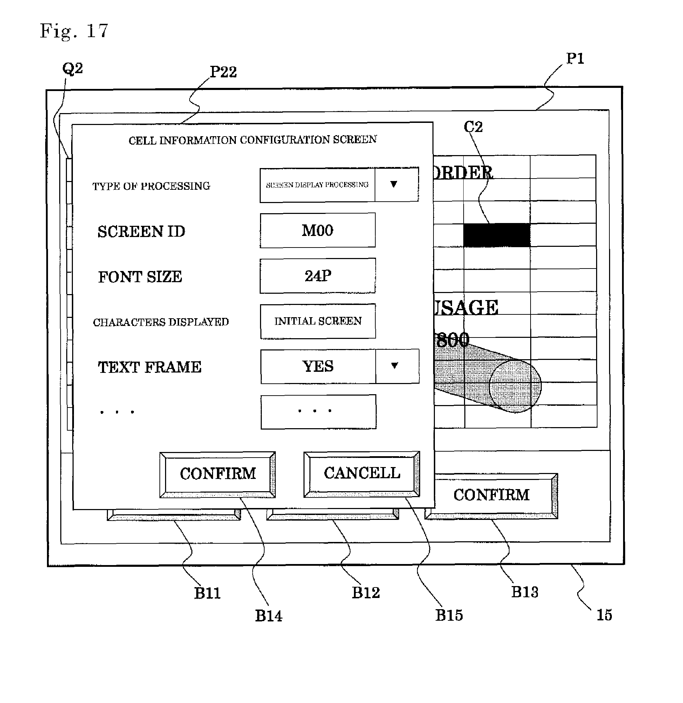

Let us now return to Fig. 9.
The present device 10 obtains the cell information using the cell information obtaining unit 13 and stores it in the screen information master unit M1 (S4).
Now a method by which the present device 10 obtains the cell information will be described.
Upon the editor's selecting a cell (for example, the editor selects the desired cell with the mouse 16 and clicks on the right button), the present device 10 stores the selected cell-ID in the cell information storage unit (not shown) in the present device 10, then shows the cell information configuration screen on the display 15 for editing the cell information. Figs. 16 and 17 illustrate an example of cell information configuration screen. The editor can, as well as inputting (selecting) the processing content in the cell information configuration screen, input the information according to the processing content.

The editor inputs the cell information using the layout configuration screen P1. That is, in the example of the layout frame L1 and the image file Q2 shown in Fig. 14, for example, the editor selects, among the cells in the layout frame L1, a cell overlapping with the image of "sausage" in the image file Q2 and inputs the cell information, using a keyboard and a mouse,
Fig. 16 shows that a processing content "order processing", an article ID "G02", a screen ID "M30" or the like are being input as the cell information of cell C1. In other words, according to the cell information, the self-order terminal 30 shows a screen having the screen ID "M30" and executes the order processing of the article ID "G02" when a range corresponding to the cell C1 of the image file Q2 shown on the display 31 is touched. The order processing will be described below.
In addition, Fig. 17 shows that a type of processing "screen display processing", a screen ID "M00", a font size "24P", a characters shown "initial screen", and a text frame "yes" or the like are input as the cell information of cell C2. In other words when, according to the cell information, the self-order terminal 30 shows a character string "initial screen" together with a text frame at a position corresponding to cell C2 with a font size "24P", when showing the image file Q2 on the display 31. In addition, the self-order terminal 30 shows a screen having the screen ID "M00" on the display 31, when a range corresponding to cell C2 of the image file Q2 shown on the display 31 is touched.
Here, it may be arranged such that, when the editor selects a cell on the display 15, the aspect of the selected cell, for example, the color may be changed in order to make the selected cell and the unselected cell distinguishable.

Selecting the "confirm" button B22 in the cell information configuration screen P2, in other words, clicking on the mouse 16, after the editor has input the cell information causes the display of the cell information configuration screen P2 to disappear, and it returns to the state in which only the layout configuration screen P1 is shown on the display 15. On this occasion, the cell information which has been input into the cell information configuration screen P2 is stored together with the cell-ID previously stored in the cell information storage unit. Here, upon the editor's selecting the "confirm" button B13 in the layout configuration screen P1, screen information is generated from the cell information stored in the cell information storage unit and stored in the screen information master unit M1.
As shown in Fig. 5, the screen information includes the screen ID which identifies the screen, the filename of an image file of the screen, the cell information or the like. In addition, the cell information includes the cell-ID, the processing content, the article ID, the screen ID, the content ID, text, or the like. Here, it may be convenient to allow the editor to specify the screen ID included in the screen information using the keyboard 16 or the like when, for example, the present device 10 shows the layout configuration screen P 1 on the display 15. The screen ID specified by the editor is stored in the screen ID storage unit (not shown) in the present device 10.
If the "confirm" button B13 of the layout configuration screen P1 is selected, screen information is generated from the cell information stored in the cell information storage unit, and is stored in the screen information master unit M1. The generated screen information includes the filename in the above-mentioned filename storage unit and the screen ID in the screen ID storage unit.

Here, if the "preview" button B11 is selected in a state where the "confirm" button B14 of the cell information configuration screen P2 is selected and the layout configuration screen P1 is shown on the display 15, the present device 10 shows the screen being edited on the display 15, based on the cell information stored in the cell information storage unit. For example, when the "preview" button B11 is selected after the cell information shown in Fig. 15 has been input, the present device 10 shows the character string "initial screen" on the display 15 in an overlapping manner with the image file Q2. The editor can check, for example, the positional relationship between the character string input as the cell information and the image file, by viewing the preview screen.
In addition, if the "delete configuration information" button B12 is selected in a state where a cell in the layout configuration screen P1 has been selected, cell information relating to the selected cell is deleted from the cell information storage unit.

Here, the smaller the size of the cell in the layout frame, the more detailed definition of the processing content of the self-order terminal 30 becomes possible according to the touch position on the screen shown on the self-order terminal 30. On the other hand, load of the editing of the cell information becomes heavier as the number of the cells in the layout frame increases.
Therefore, the present device 10 may include a copy function of the cell information. The copy function of the cell information is a function to store the cell information of a cell stored in the cell information storage unit into the cell information storage unit as cell information of another cell. In other words, Fig. 5 indicates that, for example, cell information of cell-IDs (7,4), (8,4) and (8,5) of the screen ID "M20" is identical with the cell information of cell-ID (7,3). This means that the processing content of the self-order terminal 30 is identical when the positions of these four cells are touched. The editor is required to input identical contents as the cell information of these four cells. In such a case, efficiency of editing operation can be improved by using the copy function of the cell information described in the following.
The present device 10 causes, using a cell information copy unit (not shown), the editor to specify the cell having an already-input cell-ID (7,3) as the copy source cell, and the not-input-yet or already-input cell-IDs (7,4), (8,4) and (8,5) as copy destination cell. In order for the editor to specify the copy source and destination cells, there are methods such as letting the editor select a cell in the layout frame by clicking on the mouse 16 under a condition that the image file and the layout frame are being shown in an overlapping manner.
The information of an already-input cell is stored in the cell information storage unit, as described above. The present device 10 stores, using the cell information copy unit, the cell information of the copy source cell-ID (7,3), which is stored in the cell information storage unit, into the cell information storage unit as cell information of the copy destination cell-IDs (7,4), (8,4) and (8,5).
As described above, when the editor selects the "confirm" button B 13 in the layout configuration screen P1, the present device 10 generates screen information from the cell information in the cell information storage unit, and stores it in the screen information master unit M1.
The copy function of the cell information is useful to avoid mistakes in editing operation, reduce workload of editing operation, and reduce editing operation time when inputting the same cell information into a plurality of cells in the layout frame.

Let us now return to Fig. 9.
The present device 10 outputs, using the screen information output unit 14, the screen information stored in the screen information master unit M1 (S5). Fig. 1 illustrates an example in which the present device 10 transmits the screen information stored in the screen information master unit M1 to the server 20. The server 20 transmits, as will be described below, the screen information received from the present device 10 to the self-order terminal 30. However, the present device 10 may transmit the screen information directly to the self-order terminal 30 without going through the server 20.
Here, aspects of outputting the screen information by the present device 10 include storing it in an external storage of the present device 10 such as a CD-ROM, besides transmitting to another information processor via a communication line. In this case, the self-order terminal 30 or the server 20 read the screen information from an external storage for storage.

As described above, the present device 10 is arranged to obtain the cell information of each cell in the layout frame L 1 after having shown the image file Q2 in an overlapping manner with the layout frame L1. According to the arrangement, the editor can define, while viewing the image file actually shown on the display 31 of the self-order terminal 30, the processing content of the self-order terminal 30 for each touch position of the image file. In other words, according to the present invention, screen information including a plurality of processing contents can be edited for a single image file. For example, if the screen shown on the self-order terminal 30 is composed of a single image file, the screen information can be edited to cause the self-order terminal 30 to execute different processing contents, according to the touch position of the image file.

In the following, relationship between the screen information edited by the present device 10 and the self-order system will be described.

### (About the Self-Order System)

In the self-order system, the self-order terminal 30, the kitchen terminal 40, the accounting terminal 50, and the clerk terminal 60 are connected to the server 20 via a communication line, as shown in Fig. 1. The self-order terminal 30 is arranged so that it can transmit and receive information between the kitchen terminal 40, the accounting terminal 50, and the clerk terminal 60 via the server 20.

### (About the Server)

The server 20, which is an information processor for managing information processing across the self-order system, includes an order management information database DB21, a sales management information database DB22, a screen information master unit M21, an image master unit M22, a content master unit M23, and an article master unit M24. The server 20 may be a device which can exchange information with the self-order terminal 30, the kitchen terminal 40, and the accounting terminal 50, and is realized by a personal computer, for example.

The order management information database DB21 is a database for storing order information for each self-order terminal in the restaurant, that is, for each table in the restaurant. The order information includes, for example, information relating to article ID identifying the articles ordered by the customer, number of articles ordered, time-of-day of orders, and cooking status and completion of delivery as for each of the ordered articles.

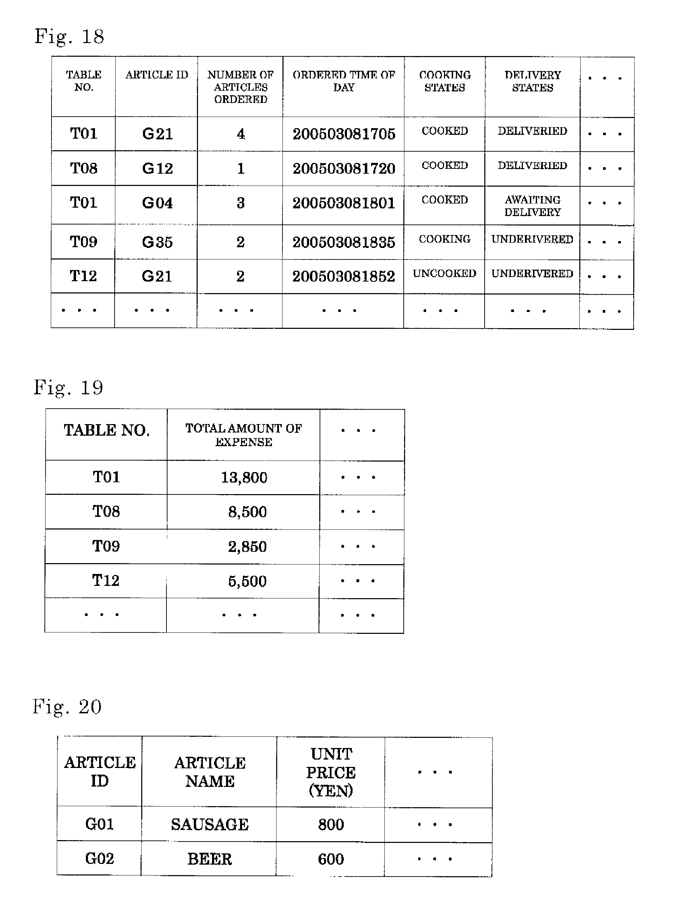

Fig. 18 illustrates an example of order information stored in the order management information database DB21. For example, the first row in the figure indicates that "four" articles with article ID "G21" were ordered from table number "T01" at 17:05, March 8, 2005 and also their delivery to the table has been completed.

The sales management information database DB22 is a database for storing sales information for each of the self-order terminals. Sales information includes total amount of expenses or the like.
Fig. 19 illustrates an example of the sales information stored in the sales management information database DB22, and indicates that total amount of expense of table number "T01" is "13,800 yen", for example.

The article master unit M24 is a unit for storing article information for each of the articles which can be ordered by the self-order terminal 30. The article information includes article name or unit price or the like. Fig. 20 illustrates an example of article information stored in the article master unit M24, and indicates that article ID "G01" has an article name "sausage" and a unit price "800 yen," for example.

Here, the total amount of expense shown in Fig. 19 is calculated from the article ID and the number of articles ordered which are included in the order information for each table number stored in the order management information database DB21 shown in Fig. 18, and the unit price stored in the article master unit M24.

The screen information master unit M21 is a unit for storing the screen information edited by the present device 10. The image master unit M22 is a unit for storing the image file to be shown on the display 31 of the self-order terminal 30. The content master unit M23 is a unit for storing the contents to be shown on the self-order terminal 30. The contents are electronic information such as image (static image, motion picture), audio, or text. In addition, as the contents, for example, advertisement of restaurants or articles (commercial message: CM), games, fortune-telling or the like may be included. Each of the contents is provided with a content ID. The filename of electronic information of the content may be an example of content ID.

### (About the Kitchen Terminal)

The kitchen terminal 40, which is a information processing terminal installed at the kitchen in the restaurant, is configured such that when a customer operates the self-order terminal 30 to order an article, the content of order such as article name and number of articles ordered, for example, are shown together with the table number.

### (About the Accounting Terminal)

The accounting terminal 50, which is a register terminal in the restaurant, is configured to show the price of the article ordered by the customer operating the self-order terminal 30.

### (About the Clerk Terminal)

The clerk terminal 60 is an information processing terminal operated by the clerk and shows, together with the table number, that a customer is requiring service, when a customer operates the self-order terminal 30 to call a clerk. In addition, after having delivered the cooked meal from the kitchen to the table, the clerk operates his/her clerk terminal 60 to transmit the information to the server 20.

### (About the Self-Order Terminal)

The self-order terminal 30, which is an information processing terminal operated directly by the customer, is arranged at each of the tables in the restaurant. The self-order terminal 30 includes a table number storage unit (not shown) for storing the table number. The self-order terminal 30 reads the table number which is preliminarily set in a terminal receptacle provided on each table, for example, when the self-order terminal 30 is mounted on the terminal receptacle, and stores it in the table number storage unit. The table number set on the terminal receptacle is a different number for each tables in the restaurant. The communication data transmitted to the server 20 from the self-order terminal 30 includes the table number, and the server 20 can identify which of the tables the communication data came from by reading the table number included in the received communication data.

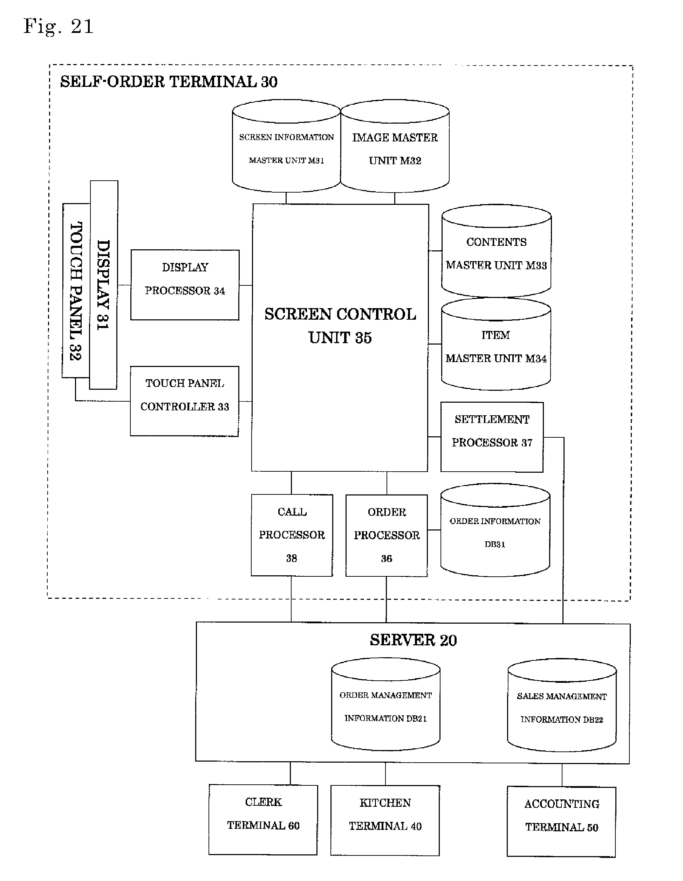

Fig. 21 is a block diagram of the self-order terminal 30. The self-order terminal 30 includes a display 31, a touch panel 32, a touch panel controller 33, a display processor 34, a screen controller 35, an order processor 36, a settlement processor 37, a call processor 38, a screen information master unit M31, an image master unit M32, a content master unit M33, an article master unit M34, and an order information database DB 31.

The screen information master unit M31 is a unit for storing the screen information edited by the present device 10. The image master unit M32 is a unit for storing the image file. The content master unit M33 is a unit for storing the contents. In addition, the order information database DB 31 is a unit for storing the order information generated by the self-order terminal 30.

When powered-on, the self-order terminal 30 transmits an request information to the server 20 using a unit not shown, requiring information to be stored in each master units M31, M32, M33 and M34. The server 20 which received the request information transmits the information in each of the master units M21, M22, M23 and M24 to the self-order terminal 30. The self-order terminal 30 stores the information received from the server 20 into respective master units M31, M32, M33 and M34.
Here, it is not limited to the situation when a request information is received from the self-order terminal 30 that the server 20 transmits, to the self-order terminal 30, information in each master unit. In other words, it may be arranged such that the server 20 transmits only the updated information, or the entire information in the master unit, to the self-order terminal 30, without receiving the request information from the self-order terminal 30, when information in the master unit of the server 20 is updated, for example.

In the following, respective types of processing, i.e., "screen display processing", "order processing", "settlement processing", "call processing", and "contents processing" executed by the self-order terminal 30 when the display 31 is touched will be described, referring to the screen examples shown in Figs. 2 to 4. Here, the screen IDs of the initial screen F1 of Fig. 2, the article selection screen F2 of Fig. 3, and the order confirmation screen F3 of Fig. 4 are assumed to be "M10", "M20", and "M30", respectively. In addition, the filenames of the image file Q1 of Fig. 6, the image file Q2 of Fig. 7, and the image file Q3 of Fig. 8 are assumed to be "Top.jpg", "Sausage.jpg", and "Order.jpg", respectively.
Here, with the self-order terminal 30, the touch panel 32 detects the touch position and notifies the detected information to the touch panel controller 33, when the display 31 is touched. For detecting the touch position, there are methods based on resistive film (analog resistive film), ultrasonic surface acoustic wave, infrared light shielding, electrostatic capacity, electromagnetic induction, or the like. The touch panel controller 33 identifies the positional information (X-coordinate value and Y-coordinate value) of the touch position based on the detection information notified from the touch panel 32, and notifies it to the screen controller 35. The screen controller 35 identifies the cell-ID corresponding to the positional information notified from the touch panel controller 33, referring to the relationship table between the coordinate values of the initial and terminal points and the cell-ID shown in Fig. 13. Furthermore, the screen controller 35 searches the cell information corresponding to the screen ID stored in the screen ID storage unit and the identified cell-ID, from screen master unit M32. Then, the screen controller 35 identifies the processing from the searched cell information, and notifies a processing request to each processor.

### (About the Screen Display Processing)

When the area A11 of the initial screen F 1 shown in Fig. 2 is touched, the screen controller 35 searches the cell information of the cell corresponding to the touch position, referring to the screen information of the initial screen F 1 in the screen information master unit M31. Here, it is assumed that processing such as "screen display processing" or a screen ID "M20" are retrieved. The screen controller 35 searches the filename "Sausage.jpg" of an image file from the screen information master unit M31, referring to the screen information of the searched screen ID "M20". Furthermore, the screen controller 35 searches the image file Q2 of the searched filename "Sausage.jpg" from the image master unit M32, and notifies it to the display processor 34. The display processor 34 shows the image file Q2 notified from the screen controller 35 on the display 31. The display 31 has the article selection screen F2 shown in Fig. 3 displayed thereon.

### (About the Order Processing)

When the image A21 of the article selection screen F2 shown in Fig. 3 is touched, the screen controller 35 searches the cell information of the cell corresponding to the touch position, referring to the screen information of the article selection screen F2 in the screen information master unit M31. Here, it is assumed that processing type "order processing", article ID "G01", and screen ID "M30" are searched. The screen controller 35 searches the article name "sausage" corresponding to the searched article ID "G01", from the article master unit M34. In addition, the screen controller 35 searches the filename "Order.jpg" of the image file from the screen information master unit M31, referring to the screen information of the searched screen ID "M30", and searches the image file Q3 from the image master unit M32. Furthermore, the screen controller 35 notifies the searched article name "sausage", the image file Q3, and the number of articles ordered "1," to the display processor 34. On this occasion, the screen controller 35 stores the article name "sausage" and the number of articles ordered "1" in the order information storage unit (not shown). The display processor 34 shows the image file Q3, the article name "sausage", and the number of articles ordered "1" on the display 31. The display 31 has the order confirmation screen F3 shown in Fig. 4 shown thereon. Here, it is assumed that the number of articles ordered "1" is defined in the screen information of the order confirmation screen F3.

The customer views the order confirmation screen F3 and confirms the content of the order. In this occasion, the number of articles ordered can be changed. For example, if the customer touches the area A31 in the order confirmation screen F3, the screen controller 35 updates the number of articles ordered "1" stored in the order information storage unit to "2", based on the cell information of the cell corresponding to the area A31 of the screen information of the order confirmation screen F3, and notifies the number of articles ordered "2" to the display processor 34. The display processor 34 shows "2" on the number-of articles-ordered field U32.
When the customer touches the area A33 of the order confirmation screen F3, the screen controller 35 notifies, to the order processor 36, order information including the article name and the number of articles ordered which are stored in the order information storage unit, based on the cell information corresponding to the area A33 of the screen information of the order confirmation screen F3. The order processor 36 stores the order information in the order information database DB31. In addition, the order processor 36 transmits, to the server 20, the order information together with the table number stored in the table number storage.
The server 20 stores the received order information in the order management information database DB21, and transmits it to the kitchen terminal 40. In addition, the server 20 calculates the total amount of expense from the order information and stores into the sales management information database DB22.

The cook in the kitchen views the order information shown on the kitchen terminal 40 and performs cooking. Here, when the cook selects a cuisine to start the cooking from the order information shown on the kitchen terminal 40, start of the cooking is notified to the server 20 from the kitchen terminal 40, and the cooking status in the order management information database DB21 is updated from "uncooked" to "cooking ". In addition, when the cooking is completed, the information is transmitted to the server 20 from the kitchen terminal 40, and the cooking status in the order management information database DB21 is updated from "cooking " to "cooked," and the delivery status is updated from "undelivered" to "awaiting delivery". When the clerk delivered the cooked article (cuisine) and operates the clerk terminal 60, the information that the delivery has completed is transmitted to the server 20 from the clerk terminal 60, and the delivery status in the order management information database DB21 is updated from "awaiting delivery" to "delivered".

### (About the Settlement Processing)

When the area A12 of the initial screen F1 shown in Fig. 2 is touched, the screen controller 35 searches the cell information of the cell corresponding to the touch position, referring to the screen information of the initial screen F1 in the screen information master unit M31. Here, it is assumed that processing type "settlement processing" is searched. The screen controller 35 notifies the settlement processor 37 of the processing request. The settlement processor 37 transmits the settlement request information including the table number stored in the table number storage unit to the server 20.
The server 20 searches the sales management information database DB22 according to the table number included in the received settlement request information, reads the total amount of expense, and transmits it to the accounting terminal 50. The total amount of expense received from server 20 is shown on the accounting terminal, and the clerk receives from the price shown on the accounting terminal 50 the customer.

### (About the Call Processing)

When the area A13 of the initial screen F1 of Fig. 2 is touched, the screen controller 35 searches the cell information of the cell corresponding to the touch position, referring to the screen information of the initial screen F1 in the screen information master unit M31. Here, it is assumed that the processing type "call processing" is searched. The screen controller 35 notifies the call processor 38 of the processing request. The call processor 38 transmits the call request information including the table number stored in the table number storage unit to the server 20.
The server 20 transmits the table number included in the received call request information to the clerk terminal 60. The clerk terminal 60 causes the display to show the table number and notifies the clerk that the customer is calling.

### (About the Contents Processing)

When the area A14 on the initial screen F1 of Fig. 2 is touched, the screen controller 35 searches the cell information of the cell corresponding to the touch position, referring to the screen information of the initial screen F 1 in the screen information master unit M31. Here, it is assumed that the processing type "contents processing" and the content ID are searched. The screen controller 35 searches the contents corresponding to the searched content ID from the content master unit M33, and notifies it to the display processor 34. The display processor 34 shows the notified contents on the display 31.

As thus described, the self-order terminal 30 shows screens or contents on the display 31, referring to the screen information edited by the present device 10, as well as executing processes according to the touch position when the display 31 is touched. The self-order system transmits various information generated by the self-order terminal 30 based on the processing according to the touch position to the kitchen terminal 40, the accounting terminal 50, and the clerk terminal 60, via the server 20.

Note that, in the embodiment described above, although the case is exemplified in which the screen information of the screen shown on the self-order terminal 30 is edited, the present invention can also be applied to cases in which the screen information of the screen shown on the kitchen terminal 40, the accounting terminal 50, the clerk terminal 60 and the like is edited.

### INDUSTRIAL APPLICABILITY

Besides the terminals composing the self-order system, the present invention can be applied to automatic vending machines of beverages or cigarettes, railway or aircraft ticket vending machines, or the so-called KIOSK terminals, for editing screen information of screens shown on information processing terminals with a touch panel.

## Claims

1. A screen information edition device having an information input unit and a display, comprising:
a screen information master unit configured to store a screen information defining a processing content of an information processing terminal according to the touch position on a screen, the screen information being associated with each of the screens shown on the information processing terminal with a touch panel;
an image master unit configured to store an image file composing the screen;
an image display unit configured to show the image file in the image master unit on the display in an overlapping manner with a layout frame having a plurality of cells, being an editing unit of the screen information;
a cell information obtaining unit configured to obtain a cell information of a cell selected from the cells in the layout frame shown in an overlapping manner with the image file by the information input unit, to generate the screen information from the obtained cell information, and to store the screen information in the screen information master unit; and
a cell information obtaining unit configured to obtain a cell information of a cell in the layout frame shown in an overlapping manner with the image file by selecting the cell with the information input unit, to generate the screen information from the obtained cell information, and to store the screen information in the screen information master unit.

2. The screen information edition device according to claim 1, further comprising a layout master unit configured to store a layout information defining a display position and a size of each cell in the layout frame in the display, wherein
the image display unit shows the layout frame on the display based on the layout information in the layout master unit.

3. The screen information edition device according to claim 1, wherein the image display unit shows the image file in an overlapping manner with the layout frame so that a boundary of each cell in the layout frame becomes visible.

4. The screen information edition device according to claim 1, wherein the image display unit shows the image file in an overlapping manner with the layout frame so that the cell at the position of a cursor whose display position is movable by the information input unit becomes visible, among the cells in the layout frame.

5. The screen information edition device according to claim 1, further comprising:
a cell information storage unit configured to store the cell information input by the information input unit; and
a unit configured to differentiate the display form of the cell on the display whose cell information is stored in the cell information storage unit, from the display form of the cell whose cell information is not stored in the cell information storage unit, among the cells in the layout frame.

6. The screen information edition device according to claim 1, further comprising:
a cell information storage unit configured to store the cell information input by the information input unit; and
a cell information copy unit configured to obtain a copy source cell and a copy destination cell specified by the information input unit, and to store the cell information of the copy source cell specified, being stored in the cell information storage unit, into the cell information storage unit, as the cell information of the copy destination cell specified.

7. The screen information edition device according to claim 1, further comprising:
a unit configured to connect to an information processing terminal via a communication network and to transmit the screen information in the screen information master unit to the information processing terminal via the communication network.

8. The screen information edition device according to claim 1, further comprising:
a unit configured to connect to a server capable of transmitting a data to the information processing terminal via a communication network and to transmit the screen information in the screen information master unit to the server via the communication network.

9. A screen information edition program configured to cause a computer to function as a screen information edition device according to any one of claims 1 to 8.

10. A computer readable recording medium storing a computer program, wherein the computer program is a screen information edition program according to claim 9.

11. A screen information edition method executed by a device comprising:
an information input unit;
a display;
a screen information master unit configured to store a screen information defining a processing content of an information processing terminal according to the touch position on a screen, the screen information being associated with each of the screens shown on the information processing terminal with a touch panel; and
an image master unit configured to store a image file composing the screen, wherein the method comprises the steps of:
showing the image file in the image master unit on the display in an overlapping manner with a layout frame having a plurality of cells, being an editing unit of the screen information; and
obtaining a cell information of a cell selected by the information input unit among the cells in the layout frame shown in an overlapping manner with the image file, generating the screen information from the obtained cell information, and storing the screen information in the screen information master unit.

12. A manufacturing method of an information processing terminal comprising a touch panel and a storage unit, and executing an information processing according to the touch position on a screen shown on the display, wherein
the method causes the storage unit to store a screen information generated by a screen information edition program according to claim 9.

13. The manufacturing method of the information processing terminal according to claim 12, wherein the method comprises a step in which
the information processing terminal connects to a server storing the screen information generated by a screen information edition program according to claim 9 via a communication network, and
the information processor receives the screen information from the server and stores the screen information in the storage unit.

14. The manufacturing method of an information processing terminal according to claim 12, wherein the method comprises a step in which
the information processing terminal connects a screen information edition device according to any one of claims 1 to 8, via a communication network, and
the information processing terminal receives the screen information from the screen information edition device and stores the screen information in the storage unit.

15. The manufacturing method of an information processing terminal according to claim 12, wherein the information processing terminal comprises a unit configured to read an information stored in an external storage, the method comprising a step in which
the information processing terminal reads the screen information from the external storage storing the screen information generated by the screen information edition program according to claim 9 and stores the screen information in the storage unit.

## Amended claims

### Amended claims under Art. 19.1 PCT

**1.** (after amendment) A screen information edition device comprising:
an information input unit;
a display;
a screen information master unit configured to store a screen information defining a processing content of an information processing terminal according to the touch position on a screen, the screen information being associated with each of the screens shown on the information processing terminal with a touch panel;
an image master unit configured to store an image file composing the screen;
an image display unit configured to show the image file in the image master unit on the display in an overlapping manner with a layout frame having a plurality of cells, being an editing unit of the screen information; and
a cell information obtaining unit configured to obtain a cell information of a cell in the layout frame shown in an overlapping manner with the image file from the information input unit, to generate the screen information from the obtained cell information, and to store the screen information in the screen information master unit.

**2.** The screen information edition device according to claim 1, further comprising a layout master unit configured to store a layout information defining a display position and a size of each cell in the layout frame in the display, wherein
the image display unit shows the layout frame on the display based on the layout information in the layout master unit.

**3.** The screen information edition device according to claim 1, wherein the image display unit shows the image file in an overlapping manner with the layout frame so that a boundary of each cell in the layout frame becomes visible.

**4.** The screen information edition device according to claim 1, wherein the image display unit shows the image file in an overlapping manner with the layout frame so that the cell at the position of a cursor whose display position is movable by the information input unit becomes visible, among the cells in the layout frame.

**5.** The screen information edition device according to claim 1, further comprising:
a cell information storage unit configured to store the cell information input by the information input unit; and
a unit configured to differentiate the display form of the cell on the display whose cell information is stored in the cell information storage unit, from the display form of the cell whose cell information is not stored in the cell information storage unit, among the cells in the layout frame.

**6.** The screen information edition device according to claim 1, further comprising:
a cell information storage unit configured to store the cell information input by the information input unit; and
a cell information copy unit configured to obtain a copy source cell and a copy destination cell specified by the information input unit, and to store the cell information of the copy source cell specified, being stored in the cell information storage unit, into the cell information storage unit, as the cell information of the copy destination cell specified.

**7.** The screen information edition device according to claim 1, further comprising:
a unit configured to connect to the information processing terminal via a communication network and to transmit the screen information in the screen information master unit to the information processing terminal via the communication network.

**8.** The screen information edition device according to claim 1, further comprising:
a unit configured to connect a server capable of transmitting a data to the information processing terminal via a communication network and transmitting the screen information in the screen information master unit to the server via the communication network.

**9.** A screen information edition program configured to cause a computer to function as a screen information edition device according to any one of claims 1 to 8.

**10.** A computer readable recording medium storing a computer program, wherein the computer program is a screen information edition program according to claim 9.

**11.** (after amendment) A screen information edition method executed by a device comprising :
an information input unit;
a display;
a screen information master unit configured to store a screen information defining a processing content of an information processing terminal according to the touch position on a screen, the screen information being associated with each of the screens shown on the information processing terminal with a touch panel; and
an image master unit configured to store an image file composing the screen, wherein the method comprises the steps of:
showing an image file in the image master unit on the display in an overlapping manner with the layout frame having a plurality of cells, being an editing unit of the screen information; and
obtaining a cell information of a cell in the layout frame shown in an overlapping manner with the image file from the information input unit, generating the screen information from the obtained cell information, and storing the screen information in the screen information master unit.

**12.** A manufacturing method of an information processing terminal comprising a touch panel and a storage unit, and executing an information processing according to the touch position on a screen shown on the display, wherein
the method causes the storage unit to store a screen information generated by a screen information edition program according to claim 9.

**13.** The manufacturing method of the information processing terminal according to claim 12, wherein the method comprises a step in which:
the information processing terminal connects to a server storing the screen information generated by a screen information edition program according to claim 9 via a communication network; and
the information processor receives the screen information from the server to store the screen information in the storage unit.

**14.** The manufacturing method of the information processing terminal according to claim 12, wherein the method comprises a step in which:
the information processing terminal connects a screen information edition device according to any one of claims 1 to 8, via a communication network; and
the information processing terminal receives the screen information from the screen information edition device to store the screen information in the storage unit.

**15.** The manufacturing method of the information processing terminal according to claim 12, wherein the information processing terminal comprises a unit for reading an information stored in an external storage, the method comprising a step in which
the information processing terminal reads the screen information from the external storage storing the screen information generated by the screen information edition program according to claim 9 and stores the screen information in the storage unit.

**16.** (after amendment) A screen information generating method executed by a device comprising:
an information input unit;
a display;
a screen information master unit configured to store a screen information defining a processing content of an information processing terminal according to the touch position on a screen, the screen information being associated with each of the screens shown on the information processing terminal with a touch panel; and
an image master unit configured to store an image file composing the screen, wherein the method comprises the steps of:
showing the image file in the image master unit on the display in an overlapping manner with a layout frame having a plurality of cells, being an editing unit of the screen information; and
obtaining a cell information of a cell in the layout frame shown in an overlapping manner with the image file from the information input unit, and generating the screen information to be stored in the screen information master unit from the obtained cell information.

**17.** (after amendment) A screen information generating device comprising:
an information input unit;
a display;
a screen information master unit configured to store a screen information defining a processing content of an information processing terminal according to the touch position on a screen, the screen information being associated with each of the screens shown on the information processing terminal with a touch panel;
an image master unit configured to store an image file composing the screen;
an image display unit configured to show the image file in the image master unit on the display in an overlapping manner with the layout frame having a plurality of cells, being an editing unit of the screen information; and
a unit configured to obtain a cell information of a cell in the layout frame shown in an overlapping manner with the image file from the information input unit and to generate a screen information to be stored in the screen information master unit from the obtained cell information.

**18.** (after amendment) A screen information generating program configured to cause a computer to function as a screen information generating device according to claim 17.

**19.** (after amendment) A computer readable recording medium storing a computer program, wherein the computer program is a screen information generating program according to claim 18.
